# EUROPÄISCHE PATENTSCHRIFT

(11) **EP 0 698 247 B1**
(45) Veröffentlichungstag und Bekanntmachung des Hinweises auf die Patenterteilung: **02.09.1998**
(21) Anmeldenummer: 94916967.6
(22) Anmeldetag: 16.05.1994
(51) Int. Cl.: G06K 7/06

(54) **SMT-LESER FÜR SIM- UND STANDARDKARTEN**
SMT READER FOR SIM AND STANDARD CARDS
LECTEUR A MONTAGE EN SURFACE DE CARTES A MODULE D'IDENTIFICATION D'ABONNE ET DE CARTES STANDARD

(30) Priorität: 14.05.1993 DE 4316306
(43) Veröffentlichungstag der Anmeldung: 28.02.1996
(73) Patentinhaber: AMPHENOL-TUCHEL ELECTRONICS GmbH, D-74080 Heilbronn (DE)
(72) Erfinder: BLEIER, Robert, D-74206 Bad Wimpfen (DE); REICHARDT, Manfred, D-74189 Weinsberg (DE)
(74) Vertreter: Wagner, Karl H., Dipl.-Ing.
(86) Internationale Anmeldenummer: EP9401581
(87) Internationale Veröffentlichungsnummer: WO9427244

(56) Entgegenhaltungen:
- EP-A- 0 476 892
- EP-A- 0 516 943
- WO-A-92/04688
- DE-A- 4 138 342
- FR-A- 2 633 754

## Beschreibung

Die vorliegende Erfindung bezieht sich auf einen Leser oder eine Kontaktiereinrichtung, die sowohl für SIM-Karten als auch für Standardchipkarten verwendet werden kann. Insbesondere bezieht sich die Erfindung auf einen SMT-Leser.

Die vorliegende Erfindung geht aus von der Problemstellung, daß die Kontatkierung einer großen und einer kleinen Karte ermöglicht werden soll und zwar mit einem Minimalblock sowie insbesondere mit separaten Führungsmitteln. Es soll dabei die wahlweise Verwendung von beiden Karten möglich sein, wobei Führungsmittel als ein Schirmelement dienen kann. Insbesondere soll der erfindungsgemäße Leser auch die SMT-Fähigkeit besitzen.

Durch die weiter unten noch zu erläuternden Erfindungsmaßnahmen wird erreicht, daß die Leiterplatte besser benutzt werden kann auf der der Leser vorzugsweise anzuordnen ist. Darüberhinaus wird erreicht, daß der Telefonhersteller sich nicht auf eine bestimmte Karte festlegen muß.

Zum Stand der Technik sei noch auf die bekannten einzulötenden sogenannten "Einlötleser", deren Kontaktträger aus "Rahmen" gebildet sind. Diese Leser beanspruchen relativ viel Platz auf der Leiterplatte. Ferner sind sie nicht SMT-Bestückungsfähig. Auch sind diese bekannten Leser nicht für die SIM-Karte verwendbar.

In der DE-OS 40 29 576 oder WO-A-92 05 513 ist ein Leser beschrieben der die große oder kleine Karte aufnehmen kann. Die Baugruppe muß jedoch werkseitig für eine Variante festgelegt werden. Der Benutzer hat selbst keine Alternative.

Zur lösung der Problemstellung sicht die Erfindung die im anspruch I genannten Maßnahmen vor. Eine Kontaktblock wird vorgesehen, der kleiner oder nur wenig größer ist als eine GSM/SIM-Karte. Dadurch entsteht maximaler Freiraum für Bauelemente. Der Kontaktblock kann mit Zentrier- und Befestigungsmitteln versehen sein.

Der Lötanschluß kann in Steckrichtung oder entgegengesetzt abgehen. Der Kontaktblock kann Ausnehmungen haben, die es ermöglichen, daß der Block durch eine Bodenplatte gesteckt und von dieser niedergehalten werden kann.

Der Kontatkblock ist gurtbar und hat Angriffsfläche für "pick and place".

Die Kartenführung kann geräteseits ausgebildet sein.

Die Kartenführung kann als ein Zusatzteil aus Kunststoff, metallisiertem Kunststoff oder aus Metall gefertigt sein.

Die metallische Führung stellt direkten Kontakt zur Leiterplatte her.

Die Kartenführung kann den Kartenendschalter aufnehmen.

Ein zweites Kartenführungsmittel zur Aufnahme der SIM-Karte kann vorgesehen sein. Die zweite Führung kann separat oder als Bestandteil der ersten Führungsmittel ausgebildet sein. Das Aufnahmeelement der zweiten Kartenführung für die SIM-Karte ist senkrecht zu den Kartenebenen bewegbar, so daß sie Benutzung der großen Karte den Kartenschlitz freigibt.

Das Aufnahmeelement kann höhenverschieblich oder einseitig gelagert sein.

Nach Entnahme der großen Karte geht die zweite Kartenführung in ihre Ausgangslage zurück und ist zur Aufnahme der kleinen Karte bereit.

Der Endlagenschalter kann von der großen Karte direkt und von der kleinen Karte indirekt über die zweite Kartenführung betätigt werden.

Gemäß bevorzugten Weiterbildungen der Erfindung ist vorgesehen den Kontaktblock wahlweise zum Aufbau eines Standardkartenlesers (kurz Chipkartenlesers) und/oder eines SIM-Kartenlesers zu verwenden. Vorzugsweise besitzt dabei der Kontaktblock im wesentlichen die Umpfangsabmessungen einer SIM-Karte, so daß dieser Kontaktblock auch kurz als SIM-Block bezeichnet werden kann. Dieser SIM-Block kann insbesondere auch zusammen mit einer Leiterplatte verwendet werden, um einen Chipkarten- und/oder SIM-Kartenleser zu bilden. Als Leiterplatte kommt dabei auch eine Metallpanele mit einem darauf angeordneten Flexprint in Frage.

Im einzelnen wird erfindungsgemäß gemäß einem Ausführungsbeispiel ein Chipkartenleser dadurch realisiert, daß man auf einer Leiterplatte oder auf einem anderen Bauteil einen Kontakt- oder SIM-Block befestigt und diesen vorzugsweise gemäß der SMT-Bauweise kontaktiert. Für die Chipkarte erforderliche Führungsmittel werden dann gesondert vom SIM-Block beispielsweise dadurch realisiert, daß man einen Rahmen um den SIM-Block herum anordnet und diesen Rahmen insbesondere an der Leiterplatte befestigt. In dem Rahmen sind dann Führungen für die Seitenkanten der Chipkarte ausgebildet. Die Befestigung des Rahmens an der Leiterplatte erfolgt vorzugsweise durch einstückig mit dem Rahmen aus Kunststoff hergestellte Zapfen, die in entsprechenden Öffnungen in der Leiterplatte eingesetzt und dann darin vorzugsweise von der Unterseite der Leiterplatte her verpreßt werden. Auch die Befestigung des SIM-Blocks an der Leiterplatte erfolgt vorzugsweise durch einstückig mit dem SIM-Block aus Kunststoff hergestellte Zapfen. Vorzugsweise bilden die Führungsmittel auch Rastmittel um die Karte, nachdem sie in den Leser eingesetzt ist und die Lesestellung erreicht hat, in der Lesestellung zu verriegeln.

Gemäß einem weiteren Ausführungsbeispiel der Erfindung wird ein verkürzte Version des eben beschriebenen Ausführungsbeispiels dadurch vorgesehen, daß man unter Verzicht auf die Verriegelungsmittel für die Chipkarte die Führungsmittel sich in etwa nur über die halbe Chipkartenlänge erstreckend anordnet.

Gemäß einem weiteren Ausführungsbeispiel der Erfindung wird wiederum ein auch als SIM-Block zu bezeichnender Kontaktblock verwendet, um einen Chipkartenleser zu relaisieren, der aber so ausgebildet ist, daß er auch SIM-Karten lesen kann. Zu diesem Zweck wird der SIM-Block in geeigneter Weise bezüglich der Kartenführungsmittel positioniert und Adaptermittel stellen sicher, daß der gleiche Leser entweder eine Chipkarte oder aber eine SIM-Karte lesen kann.

Durch die erfindungsgemäßen Maßnahmen ergeben sich Chipkarten- bzw. SIM-Kartenleser, die kostengünstig hergestellt werden können, insbesondere auch deshalb, weil die Lagerhaltung für die erforderlichen Komponenten vereinfacht wird. Der an sich für das Lesen von SIM-Karten konzipierte Kontaktblock kann auch für das Lesen von Chipkarten verwendet werden.

Weitere Vorteile, Ziele und Einzelheiten der Erfindung ergeben sich aus der Beschreibung von Ausführungsbeispielen anhand der Zeichnung.

In der Zeichnung zeigt:

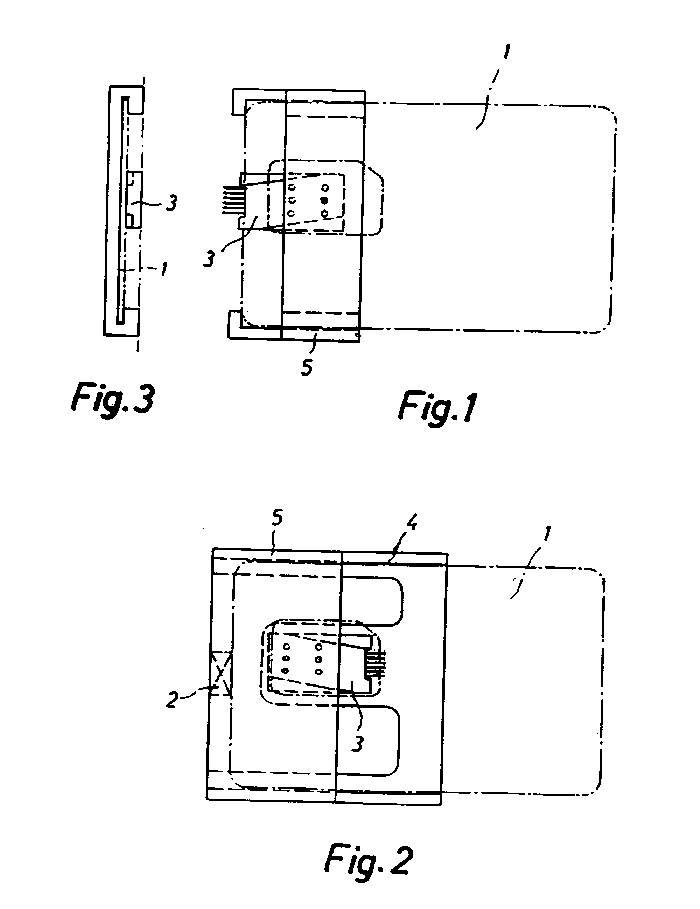

- Fig. 1, 2 und 3: schematische Darstellungen eines ersten Ausführungsbeispiels eines Lesers in SMT-Bauweise für SIM- und Standardkarte;

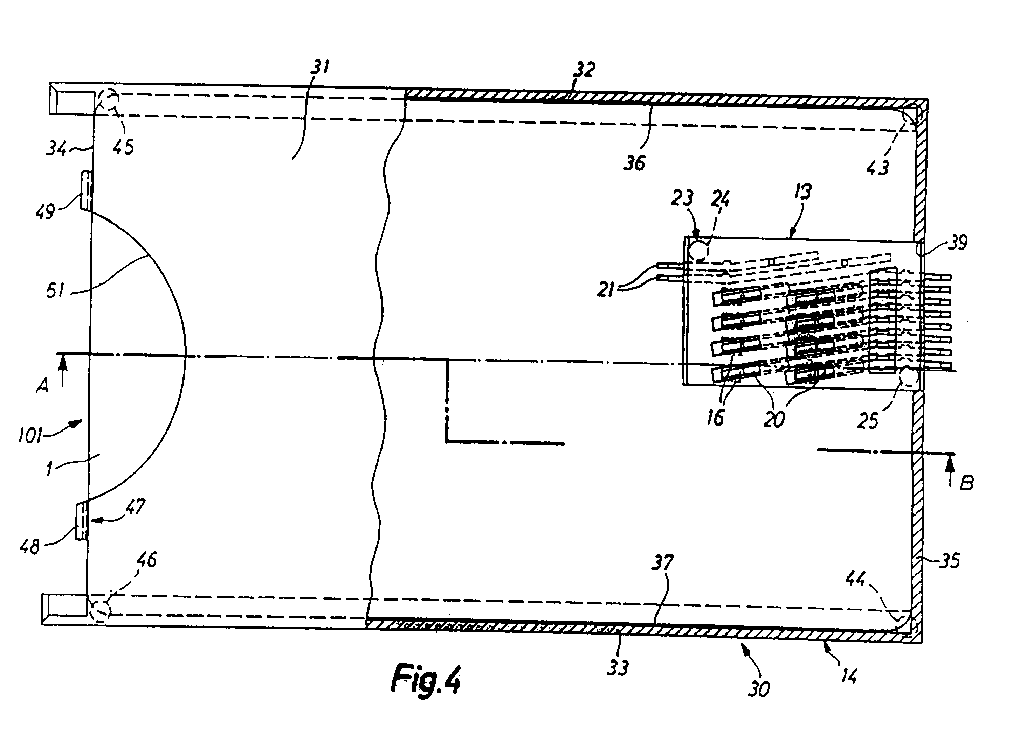

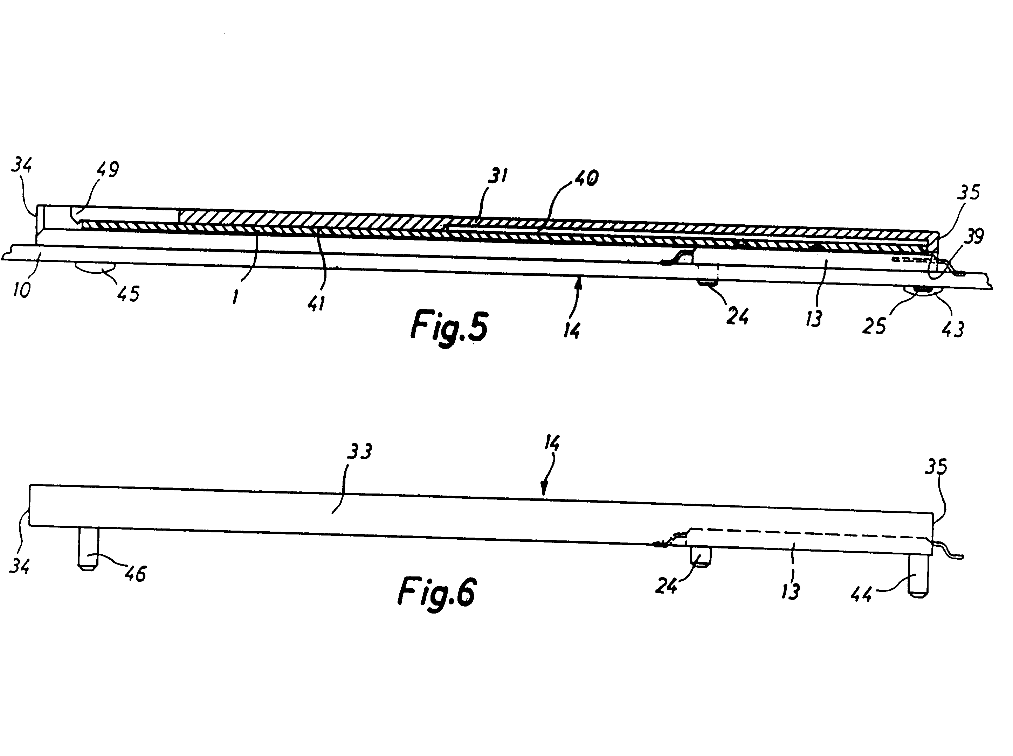

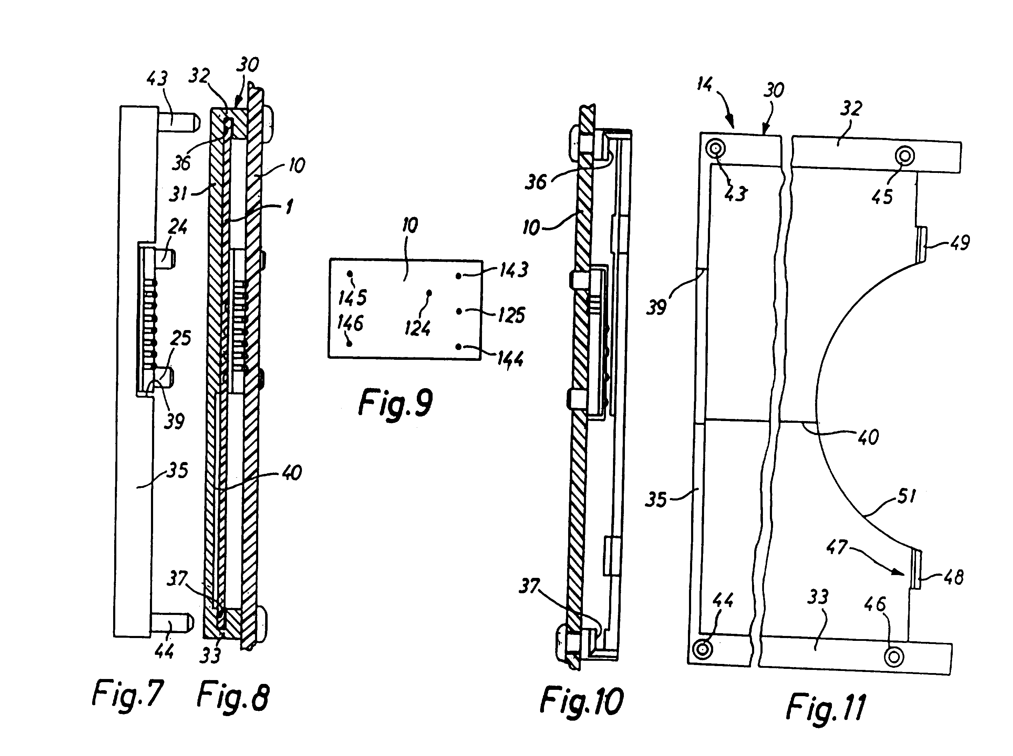

- Fig. 4 bis 11: ein zweites Ausführungsbeispiel eines Chipkartenlesers der Erfindung, wobei Fig. 4 eine schematische Draufsicht, Fig. 5 ein schematischer Schnitt längs Linie A-B, Fig. 4 und Fig. 6 eine Seitenansicht, Fig. 7 eine Ansicht des Chipkartenlesers in Fig. 4 von rechts, Fig. 8 ein schematischer Querschnitt des Lesers gemäß Fig. 4, Fig. 9 eine Draufsicht auf eine verkleinert, dargestellte Leiterplatte, Fig. 10 eine schematische Ansicht des Chipkartenlesers gemäß Fig. 4 von links, und Fig. eine Draufsicht sozusagen auf die Unterseite des die Führungsmittel für die Chipkarte bildenden Rahmens des Chipkartenlesers gemäß Fig. 4 ist;

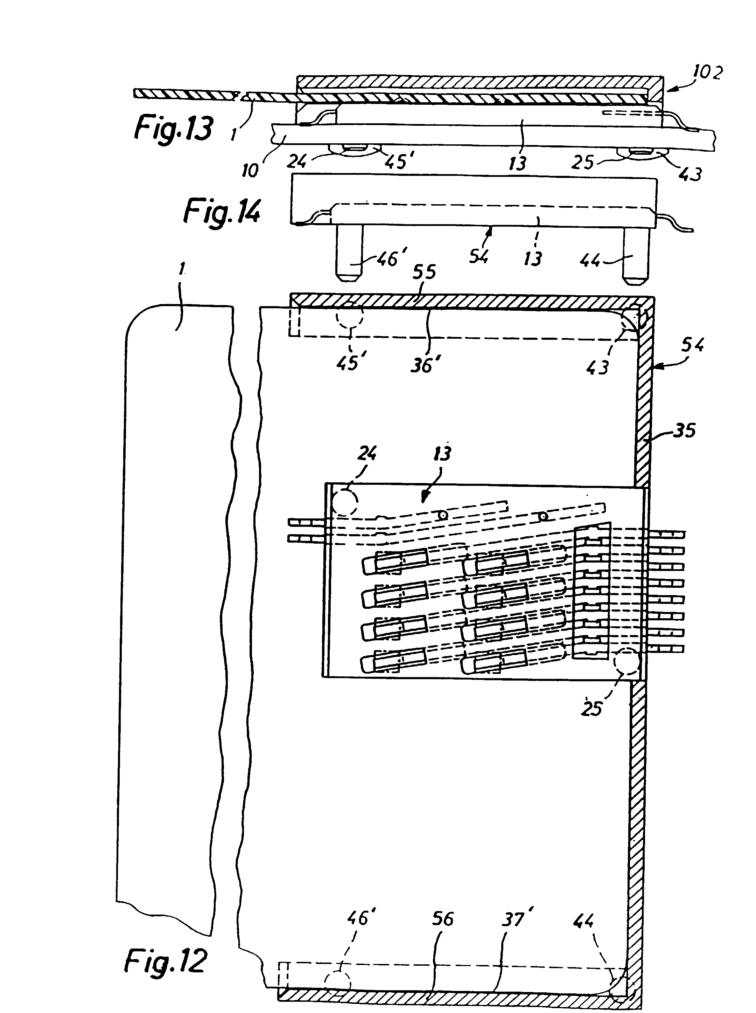

- Fig. 12 bis 14: ein drittes Ausführungsbeispiel der Erfindung, wobei Fig. 12 eine Draufsicht ähnlich Fig. 4 ist und Fig. 13 bzw. 14 ein Schnitt bzw. eine Ansicht ähnlich der Fig. 5 und 6 sind;

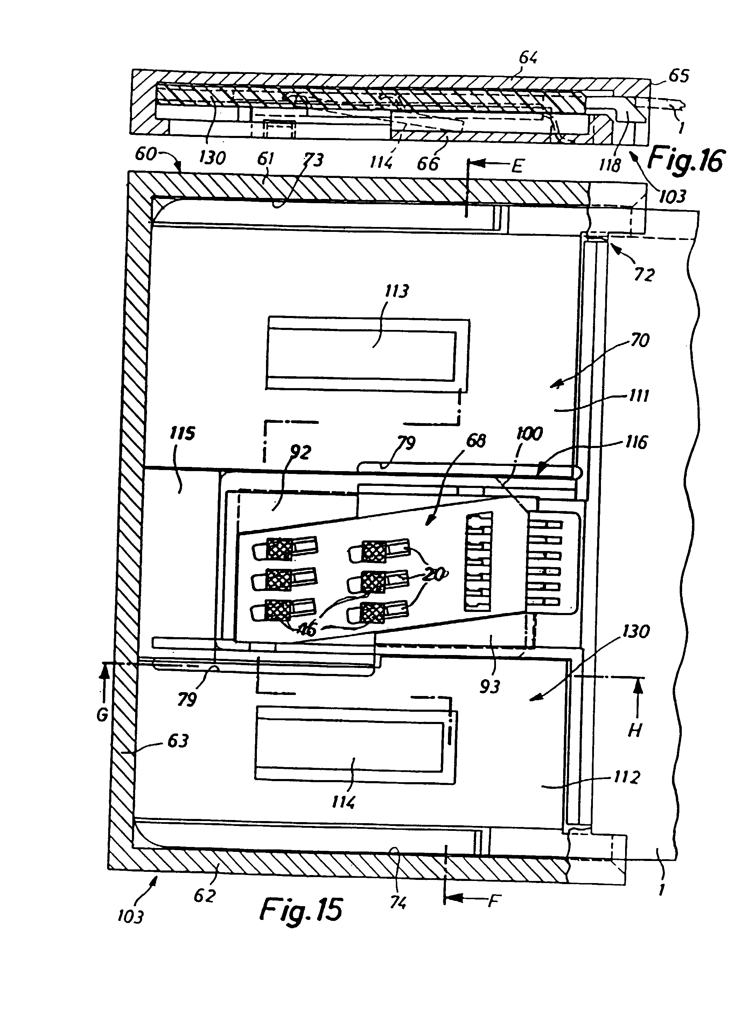

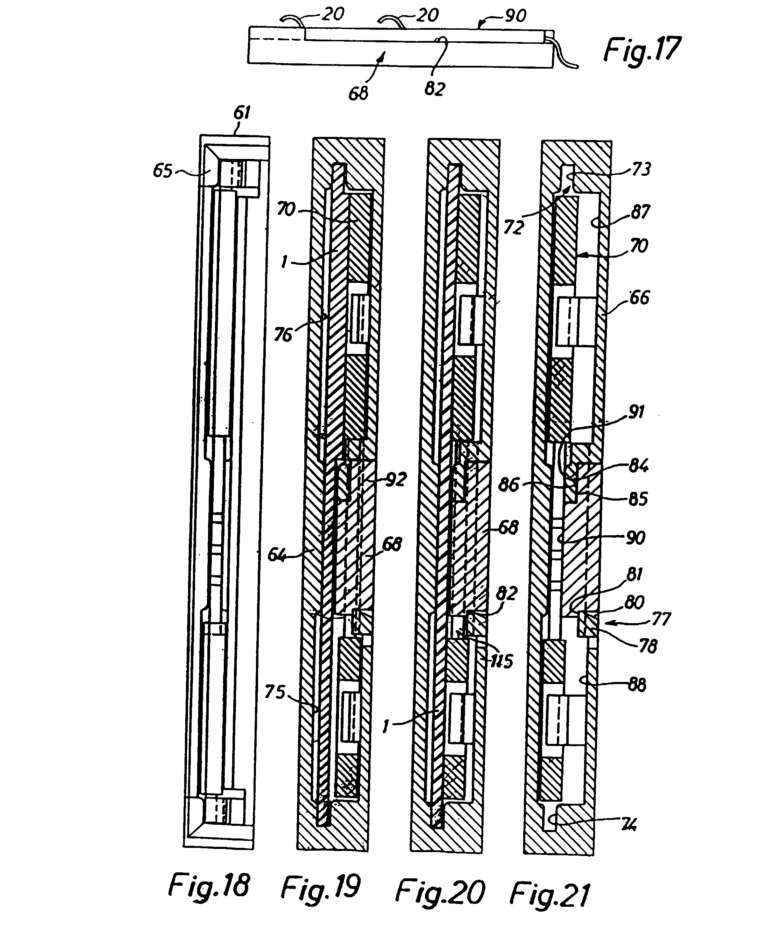

- Fig. 15 bis 21: ein viertes Ausführungsbeispiel eines Chipkarten- und/oder SIM-Kartenlesers, wobei Fig. 15 eine schematische aufgeschnittene Draufsicht auf den Leser, Fig. 16 einen schematischen Schnitt längs Linie G-H in Fig. 15, Fig. 18 eine Ansicht des Lesers gemäß Fig. 15 von rechts und Fig. 19 eine schematische Querschnittsansicht längs Linie E-F in Fig. 15 ist, wobei in Fig. 19 eine Chipkarte mit Prägung eingesetzt ist, während in Fig. 20 eine normale Chipkarte eingesetzt ist, während in Fig. 21 eine SIM-Karte in den Leser eingesetzt ist.

In den Fig. 1, 2 und 3 erkennt man die Chipkarte 1 die in Fig. 2 gegen einen Endlagenschalter 2 gestoßen ist. Erste Führungsmittel 5 sowie zweite Führungsmittel 4 sind zusammen mit einem Kontaktblock 3 vorgesehen.

Folgendes wird also durch die Erfindung erreicht:
1. Leiterplattenmontage, SMT, "pick + place"-fähig;
2. Maximaler Freiraum für Baulelemente auf der Leiterplatte;
3. Verwendung wahlweise für große und kleine (SIM)-Karte;
4. Schirmung leicht mögliche;
5. Kartenführungsmittel alternativ als Gerätebestandteil;
6. Minimal mögliche Herstellungskosten

Die Fig. 4 bis 11 veranschaulichen ein zweites Ausführungsbeispiel eines Chipkartenlesers 101. Der Chipkartenleser 101 wird vorzugsweise durch eine Leiterplatte 10 gebildet, auf der ein Kontaktblock 13 befestigt ist. Führungsmittel 14 (Fig. 4) zur Führung der Chipkarte 1, bei deren Bewegung in eine Lesestellung sind vorgesehen und umgeben in entsprechender Weise den Kontaktblock 13, so daß die Kartenkontakte 16 der Chipkarte 1 bei Erreichen der Lesestellung mit den entsprechenden Kontaktelementen 20 des Kontaktblocks 13 ausgerichtet sind. Die Kontaktelemente 20 haben Anschlüsse 22, die vorzugsweise für die SMT-Bauweise geeignet sind. Ferner sind Kontaktelemente 21 für einen Endlagenschalter vorgesehen. Der Kontaktblock 13, der auch als SIM-Block bezeichnet wird, weil er in etwa eine dem Kontaktfeld einer SIM-Karte entsprechende Größe besitzt, weist Befestigungsmittel 23 auf, mit denen er an der Leiterplatte 10 befestigbar ist. Vorzugsweise sind die Befestigungsmittel in der Form von Zapfen ausgebildet und zwar sind insbesondere zwei diagonal vorgesehene Zapfen 24 und 25 einstückig mit dem SIM-Block 13 aus Kunststoff hergestellt. Der SIM-Block 13 besteht im wesentlichen aus einem Isolierkörper, indem die Kontaktelemente 20 beispielsweise in Kammern angeordnet sind. Die Lagerhaltung dieser SIM-Blöcke 13 ist außerordentlich einfach; sie können je nach Bedarf an einer Leiterplatte 10 befestigt werden. Eine solche Leiterplatte 10 ist schematisch stark verkleinert in Fig. 9 gezeigt und man sieht dort die Bohrungen 124 und 125, die zur Aufnahme der Zapfen 24 und 25 des Kontaktblocks 13 dienen. Die Zapfen 24 und 25 ragen vorzugsweise durch die Leiterplatte 10 soweit hinaus, daß sie zur Halterung dort verpreßt werden können. Der Kontaktblock 13 hat wie gezeigt im ganzen eine quaderförmige Gestalt, wobei die Kontaktelemente 20 für die Kartenkontakte 16 vorzugsweise auf der einen Seite mit den Anschlüssen 22 herausragen, um mit Leiterbahnen der Leiterplatte in federnde Kontaktberührung kommen zu können.

Die Führungsmittel 14 für die Chipkarte 1 bestehen im wesentlichen aus einem im Längsquerschnitt vorzugsweise U-förmigen Rahmen 30. Diesen Rahmen 30 bildet eine Oberwand 31, eine erste Seitenwand 32, eine zweite Seitenwand 33, eine Vorderwand 34 und eine Rückwand 35. In den ersten und zweiten Seitenwänden sind jeweils Längsschlitze 36 und 37 für die Führung der Karte 1 ausgebildet. Der Rahmen 30 ist vorzugsweise aus Kunststoff hergestellt. In der Rückwand 35 ist ein Ausschnitt 39 (Fig. 7) vorgesehen, der den Kontaktblock 13 zugänglich macht. Eine Ausnehmung 40 (Fig. 8) in der Oberwand 31 ermöglicht das Einführen einer Chipkarte 1 mit Prägung. Im übrigen bildet die Oberwand 31 zur Karte 1 (vgl. Fig. 5) hinweisende Führungsanlageflächen 41, so daß bei Erreichen der in Fig. 8 gezeigten Lesestellung die Karte 1 kontaktsicher gegen die Kontaktelemente 20 mit ihren Kartenkontakten 16 gedrückt wird.

Die Befestigung des Rahmens 30 an der Leiterplatte 10 erfolgt durch Befestigungsmittel, die vorzugweise durch Zapfen 43, 44, 45 und 46 gebildet werden, welche vorzugsweise einstückig aus Kunststoff zusammen mit dem Rahmen 30 hergestellt sind. Diese Zapfen 43-46 sind in die in Fig. 9 schematisch gezeigten Löcher 143, 144, 145 und 146 der Leiterplatte 10 einsetzbar, wobei die über die Unterseite der Leiterplatte 10 vorstehenden Enden der Zapfen 43 bis 46 in der in Fig. 5 gezeigten Weise verpreßt werden. Vorzugsweise ist die Länge der Oberwand 31 derart ausgebildet, daß an ihrem freien Ende Rastmittel 47 vorzugsweise in der Form von Rasthaken 48, 49 vorgesehen sein können, um die Chipkarte 1 in ihrer Lesestellung zu verrasten. Vorzugsweise benachbart zu den Rastmitteln 48, 49 ist ein Griffausschnitt 51 in der Oberwand 31 vorgesehen, um die Karte 1 wieder aus der Lesestellung entfernen zu können.

Die Fig. 12 bis 14 zeigen ein drittes Ausführungsbeispiel der Erfindung gemäß welchem ein Chipkartenleser 102 vorgesehen wird, der den gleichen SIM-Block 13 verwendet, wie das Ausführungsbeispiel gemäß den Fig. 4 bis 11. Es sei insofern auf die vorausgegangene Beschreibung verwiesen. Im Unterschied zum vorangegangenen Ausführungsbeispiel werden hier die Führungsmittel für die Chipkarte durch einen vorzugsweise im Querschnitt U-förmigen Rahmen 54 gebildet, der allgemein wie der Rahmen 30 ausgebildet ist, jedoch kürzere Seitenwände 55, 56 besitzt, die ebenso kürzere Längsschlitze 36', 37' bilden. Auf diese Weise wird eine kompaktere Bauweise erreicht. Zapfen 46' liegen dabei näher zu den Zapfen 44 wegen der kürzeren Bauweise.

Die Fig. 15 bis 21 zeigen ein viertes Ausführungsbeispiel der Erfindung und zwar einen Leser 103, der sowohl als Chipkartenleser wie als SIM-Kartenleser einsetzbar ist.

Der Leser 103 weist ein Gehäuse 60 auf. Das Gehäuse 60 besitzt eine erste Seitenwand 61, eine zweite Seitenwand 62, eine Rückwand 63, eine Oberwand 64 und eine Vorderwand 65. Neben dem Gehäuse 60 besitzt der Leser 103 einen Kontaktblock, kurz SIM-Block 68, von ähnlicher, aber etwas unterschiedlicher Bauart wie der Kontaktblock 13 der vorhergehenden Ausführungsbeispiele. Ferner weist der Leser 103 eine Adapterplatte 130 auf, die es ermöglicht, entweder eine Standard- oder Chipkarte 1 oder aber eine SIM-Karte (Umriß bei 100), d. h. eine kleinere Karte als die Chipkarte 1 zu lesen, wobei in beiden Fällen die durch die Kartenkontakte 16 der Chip- bzw. SIM-Karte gebildeten Kontaktfelder gleich oder ähnlich sind.

Für die Führung der Chipkarte 1 sind Führungsmittel 72 vorgesehen, die erfindungsgemäß vorzugsweise durch Führungsschlitze 73 und 74 der Seitenwände 55, 56 gebildet werden. Diese Schlitze 73, 74 erstrecken sich in etwa parallel zur Oberseite 90 (Fig. 21) des Kontaktblocks 68. Die Schlitze 73, 74 sind ferner derart angeordnet, daß beim Einschieben einer Chipkarte 1 die Adapterplatte 70 weg bewegt wird, so daß die Kartenkontakte 16 der Chipkarte 1 mit den Kontaktelementen 20 des Kontaktblocks 68 vorzugsweise federnd in Eingriff kommen können.

In der Oberwand 64 sind Ausnehmungen 75, 76 (vgl. Fig. 19) vorgesehen.

Ferner bildet das Gehäuse 60 Rastmittel 77 (Fig. 21), die dazu dienen den Kontaktblock 68 in seiner Arbeitsstellung im Gehäuse 60 zu befestigen, vorzugsweise zu verrasten. Im einzelnen weisen die Rastmittel 77 zwei diametral angeordnete Rastarme 78 auf, von denen deutlich in den Fig. 19 bis 21 nur der eine Rastarm 78 gezeigt ist, während der vorzugsweise diagonal entgegengesetzt dazu angeordnete Rastarm nicht zu erkennen ist. Die Rastarme 78 werden vorzugsweise von der unteren Wand 66 des Gehäuses 60 unter Verwendung von Schlitzen 79 gebildet. Der Rastarm 78 besitzt eine Schräge 80, um das Einsetzen des Kontaktblocks 68 zu erleichtern. Ferner besitzt der Rastarm 78 eine Rastfläche 81, die mit einer Gegenrastfläche 82 am Kontaktblock 68 zusammenwirkt.

Wie man im einzelnen am besten in Fig. 21 erkennt, bildet die untere Wand 66 einen vorzugsweise abgewinkelten Arm 84, der eine Auflagefläche 85 bildet, die an einer Gegenauflagefläche 86 des Kontaktblocks 68 anliegen kann.

Die untere Wand 66 bildet ferner (vgl. wiederum Fig. 21) zwei Ausnehmungen 87, 88.

Der Kontaktblock 68 enthält vorzugsweise vorgespannte Federelemente 20, die ebenfalls vorzugsweise insbesondere im Bereich der Kontaktgabe mit den Kartenkontakten 16 schräg verlaufen. Parallel zu der bereits erwähnten Oberseite 90 verläuft fluchtend eine Oberseite 91, gebildet durch das Gehäuse 60.

Eine SIM-Karte 100 ist (wie bereits erwähnt) schematisch in Fig. 15 durch ihren Umriß angedeutet.

Die erfindungsgemäßen Adaptermittel in der Form einer Adapterplatte 70 ermöglichen das wahlweise Einsetzen einer Chipkarte 1 oder einer SIM-Karte 100. Die Adapterplatte 70 weist zwei Plattenteile 111 und 112 auf, die jeweils ein Federelement 113 bzw. 114 besitzen, welche sich auf der innenliegenden Oberfläche der unteren Wand 66 abstützen. Ein Zwischenteil 115 (Fig. 20) verbindet die beiden Plattenteile 111 und 112. Für das Einsetzen der SIM-Karte 100 ist eine SIM-Kartenführung 116 vorgesehen. Die beiden Plattenteile 111, 112 bilden ferner an ihren seitlichen Rändern Betätigungsarme 118, die - wie in Fig. 16 gezeigt - eine Bewegung der Adapterplatte 70 nach unten ermöglichen, so daß eine reguläre Chipkarte 1 - durch die Führungsmittel 72, 73, 74 geführt - in ihre Lesestellung gebracht werden kann, ohne durch die Adapterplatte 70 behindert zu sein.

Die Fig. 19 und 20 zeigen jeweils eine eingesetzte Chipkarte 1, wobei in Fig. 19 die Chipkarte 1 eine Prägung aufweist, während in Fig. 20 ein normale Chipkarte, d. h. eine Chipkarte ohne Prägung Verwendung gefunden hat. Man sieht deutlich, daß die Adapterplatte 70 entgegen der Wirkung der Federelemente 113, 114 verschoben ist. Wenn also die Chipkarte 1 durch Hineinfassen in einen hier nicht gezeigten Griffausschnitt wieder aus dem Gehäuse 60 herausgezogen wird, so kehrt auch die Adapterplatte 70 wieder in die in Fig. 21 gezeigte Position zurück.

In der Darstellung gemäß Fig. 21 ist die SIM-Karte 100 eingesetzt, d. h. sie befindet sich in einer vorzugsweise durch die Adapterplatte 70 gebildeten Öffnung und wird gegen die Kontaktelemente 20 des SIM-Block 68 federnd gedrückt.

Was den SIM-Block 68 anlangt, so ist dieser, wie erwähnt, vorzugsweise in der unteren Wand 66 verrastet. Ferner ist der SIM-Block mit Flügeln 92, 93 ausgestattet, die eine sichere Anlage an den entsprechenden Teilen des Gehäuses 60 sicherstellen.

## Patentansprüche

1. Kontaktiereinrichtung für eine Chipkarte oder eine SIM-Karte, wobei folgendes vorgesehen ist:
eine Leiterplatte (10),
ein durch Löten auf der Leiterplatte (10) befestigbarer Kontaktblock (13), der die Leiterplatte gemäß der SMT-Bauweise kontaktiert und
gesondert vom Kontaktblock realisierte Kartenführungsmittel (30) für die Führung der Chipkarte oder SIM-Karte,
wobei die Kartenführungsmittel an der Leiterplatte (10) befestigt sind,
und wobei ferner Führungs- und Befestigungsmittel (23) für den Kontaktblock (13) an der Leiterplatte (10) und für die Kartenführungsmittel (30) an der Leiterplatte jeweils durch zapfen (23, 43-46) gebildet werden, die einstückig mit dem Kontaktblock bzw. den Kartenführungsmitteln aus Kunststoff hergestellt sind.

2. Kontaktiereinrichtung nach Anspruch 1, dadurch gekennzeichnet, daß der Kontaktblock kleiner oder wenig größer ist als eine GSM/SIM-Karte, um so maximalen Freiraum für die Bauelemente zu lassen.

3. Kontaktiereinrichtung nach Anspruch 1 oder 2, dadurch gekennzeichnet, daß der Kontaktblock Ausnehmungen besitzt, die es ermöglichen, daß der Block durch eine Bodenplatte gesteckt und von dieser niedergehalten werden kann.

4. Kontaktiereinrichtung nach einem der Ansprüche 1 bis 3, dadurch gekennzeichnet, daß die Kartenführung aus metallisiertem Kunststoff oder aus Metall gefertigt ist.

5. Kontaktiereinrichtung nach einem der vorhergehenden Ansprüche, dadurch gekennzeichnet, daß die Kartenführungsmittel als gesonderter Rahmen ausgebildet sind.

6. Kontaktiereinrichtung für eine Standardchipkarte nach einem der vorhergehenden Ansprüche, dadurch gekennzeichnet, daß ein Kontaktblock mit dem Umriß einer SIM-Karte, ein sogenannter SIM-Block (13) zur Kontaktierung der Chipkarte verwendet wird, und daß die Chipkarte vollständig in einem Rahmen bzw. Gehäuse (14, 30) geführt ist.

7. Kontaktiereinrichtung nach Anspruch 6, dadurch gekennzeichnet, daß die Karte im Rahmen verriegelbar ist.

8. Kontaktiereinrichtung nach Ansprch 6 oder 7, dadurch gekennzeichnet, daß der Rahmen nur einen Teilbereich der Karte aufnehmen kann.

9. Kontaktiereinrichtung nach einem der vorhergehenden Ansprüche, dadurch gekennzeichnet, daß die Zapfen in entsprechende Bohrungen in der Leiterplatte eingesetzt sind und die an ihrem durch die Leiterplatte durchtretenden Ende zum Zwecke der Befestigung verquetscht sind.

10. Kontaktiereinrichtung nach einem der vorhergehenden Ansprüche 5 bis 9, dadurch gekennzeichnet, daß der gesonderte Rahmen (30) Befestigungsmittel vorzugsweise in der Form von Zapfen (43 bis 46) aufweist, die in entsprechende Öffnungen in der Leiterplatte eingesetzt werden, und mit ihren freien Enden zum Zwecke der Befestigung verpreßt sind.

11. Kontaktiereinrichtung nach einem der vorhergehenden Ansprüche, dadurch gekennzeichnet, daß der Kontaktblock (13) Kontaktelemente (20) aufweist, die leicht schräg zur Längsachse des Gehäuses verlaufen.

12. Kontaktiereinrichtung wahlweise für eine SIM-Karte oder eine Standardkarte nach einem der vorhergehenden Ansprüche, gekennzeichnet durch ein Gehäuse (60) mit Führungsmitteln (72) für eine Chipkarte (1) und mit Aufnahmemitteln für eine SIM-Karte (100), wobei Adaptermittel (70) vorgesehen sind, die beim Einschieben einer Chipkarte (1) durch diese betätigt werden, um die Kontaktierung der Chipkarte zu ermöglichen.

13. Kontaktiereinrichtung nach Anspruch 12, dadurch gekennzeichnet, daß die Adaptermittel in der Form einer Platte ausgebildet sind, die im Gehäuse bewegbar angeordnet ist.

14. Kontaktiereinrichtung nach Anspruch 12 oder 13, dadurch gekennzeichnet, daß die Adapterplatte mit Betätigungsarmen (118) in den Einführbereich der Chipkarte (1) in das Gehäuse ragt, um so beim Eintritt der Karte (1) in das Gehäuse weggedrückt zu werden.

15. Kontaktiereinrichtung nach einem der vorhergehenden Ansprüche 12 bis 14, dadurch gekennzeichnet, daß die Adapterplatte Federmittel (113, 114) aufweist und sich mit diesen am Gehäuse abstützt und so in eine Position gespannt ist, in der das Einsetzen einer CHipkarte (1) nur entgegen der Kraft dieser Federmittel möglich ist.

## Claims

1. A contacting apparatus for a chip card (smart card) or an SIM-card, wherein the following is provided:
a circuit board (10),
a contact block (13) adapted for fastening to the circuit board (10) by soldering and that contacts the circuit board in accordance with SMT (surface mounted technology) techniques and
card guiding means (30) implemented separately from the contact block for guiding the chip card or SIM-card,
wherein the card guiding means are adapted for fastening to the circuit board (10),
and wherein furthermore guide and fastening means (23) are provided for the contact block (13) and the card guiding means (30) and are formed by respective pegs (23, 43-46) that are manufactured of plastic as a single piece with the contact block and the card guiding means, respectively.

2. The contacting apparatus in accordance with claim 1 characterized in that the contact block is smaller or slightly larger than a GSM/SIM-card, in order to allow a maximum of free space for the components.

3. The contacting apparatus in accordance with claim 1 or 2 characterized in that the contact block possesses cut-outs that allow the block to be inserted through a base plate and be held down by same.

4. The contacting apparatus in accordance with one of claims 1 to 3 characterized in that the card guide is manufactured of metallized plastic or of metal.

5. The contacting apparatus in accordance with one of the preceding claims characterized in that the card guide means is formed in a separate frame.

6. A contacting apparatus for a standard chip card in accordance with one of the preceding claims characterized in that a contact block having the outline of an SIM-card, a so-called SIM-block (13) for contacting the chip card is employed, and that the chip card is guided entirely in a frame or housing (14, 30).

7. The contacting apparatus in accordance with claim 6 characterized in that the card is lockable in the frame.

8. The contacting apparatus in accordance with claim 6 or 7 characterized in that the frame can only accept a portion of the card.

9. The contacting apparatus in accordance with one of the preceding claims characterized in that the pegs are inserted into corresponding bores in the circuit board and that they are deformed on their ends sticking through the circuit board to effect fastening.

10. The contacting apparatus in accordance with one of preceding claims 5-9 characterized in that a separate frame (30) comprises fastening means preferably in the form of pegs (43 to 46) that are inserted into corresponding openings in the circuit board and that their free ends are pressed down to effect fastening.

11. The contacting apparatus in accordance with one of the preceding claims characterized in that the contact block (13) comprises contact elements (20) that run slightly diagonal to the longitudinal axis of the housing.

12. The contacting apparatus electively for an SIM-card or a standard card in accordance with one of the preceding claims characterized by a housing (60) with guide means (72) for a chip card (1) with accepting means for an SIM-card (100), wherein adapter means (70) are provided that are actuated during insertion of a chip card (1) by same in order to allow contacting with the chip card.

13. The contacting apparatus in accordance with claim 12 characterized in that the adapter means are formed in the shape of a plate (board) that is moveable mounted in the housing.

14. The contacting apparatus in accordance with claim 12 or 13 characterized in that the adapter board with actuating arms (118) in the insertion region of the chip card (1) ) projects into the housing such that they are pushed away into the housing during entrance (insertion) of the card (1).

15. The contacting apparatus in accordance with one of preceding claims 12 to 14 characterized in that the adapter board comprises spring means (113, 114) and supports itself by means of same on the housing and is thus biased in a position, in which the insertion of the chip card (1) ) is only possible again the force of these spring means.

## Revendications

1. Dispositif de mise en contact pour une carte à puce ou une carte SIM/à module d'identification de l'abonné, dans lequel est prévu ce qui suit:
une carte à circuit imprimé (10),
un bloc de contacts (13) qui peut se fixer par soudure sur la carte à circuit imprimé (10) et qui vient en contact avec la carte à circuit imprimé selon la technique SMT/technique de montage en surface et
des moyens (30) de guidage de la carte, réalisés, à part du bloc du contact, pour le guidage de la carte à puce ou de la carte SIM,
dans lequel les moyens de guidage de la carte sont fixés sur la carte à circuit imprimé (10),
et dans lequel, en outre, des moyens de guidage et de fixation (23) pour le bloc de contacts (13) sur la carte à circuit imprimé (10) et pour les moyens (30) de guidage de la carte de la carte à circuit imprimé sont chacun formés par des tétons (23, 43-46) qui sont fabriqués en plastique, d'une pièce avec le bloc de contacts ou avec les moyens de guidage de la carte.

2. Dispositif de mise en contact selon la revendication 1, caractérisé par le fait que le bloc de contacts est plus petit ou un peu plus grand qu'une carte GSM/téléphone portable spécial de groupe (?)/ SIM/module d'identification de l'abonné, pour laisser un espace libre maximal pour les composants.

3. Dispositif de mise en contact selon la revendication 1 ou 2, caractérisé par le fait que le bloc de contacts présente des évidements qui permettent au bloc de s'enficher dans une plaque de fond qui peut le maintenir.

4. Dispositif de mise en contact selon l'une des revendications 1, à 3, caractérisé par le fait que le guidage de la carte est fabriqué en plastique métallisé ou en métal.

5. Dispositif de mise en contact selon l'une des revendications précédentes, caractérisé par le fait que les moyens de guidage de la carte sont conçus sous forme d'un cadre à part.

6. Dispositif de mise en contact pour une carte à puce standard selon l'une des revendications précédentes, caractérisé par le fait que pour la mise en contact de la carte à puce on emploie un bloc de contacts présentant le contour d'une carte SIM, bloc dénommé bloc SIM (13), et que la carte à puce est complètement guidée dans un cadre ou un boîtier (14, 30).

7. Dispositif de mise en contact selon la revendication 6, caractérisé par le fait que la carte peut se verrouiller dans le cadre.

8. Dispositif de mise en contact selon la revendication 6 ou 7, caractérisé par le fait que le cadre ne peut recevoir qu'une zone partielle de la carte.

9. Dispositif de mise en contact selon l'une des revendications précédentes, caractérisé par le fait que les tétons s'insèrent dans des perçages appropriés prévus dans la carte à circuit imprimé et qu'aux fins de fixation, on en écrase les extrémités passées à travers la carte à circuit imprimé.

10. Dispositif de mise en contact selon l'une des revendications précédentes 5 à 9, caractérisé par le fait que le cadre à part (30) présente des moyens de fixation, de préférence sous forme de tétons (43 à 46) que l'on insère dans des ouvertures appropriées prévues dans la carte à circuit imprimé et dont, aux fins de fixation, on écrase les extrémités libres.

11. Dispositif de mise en contact selon l'une des revendications précédentes, caractérisé par le fait que le bloc de contacts (13) présente des éléments de contact (20) qui sont orientés légèrement en biais par rapport à l'axe longitudinal du boîtier.

12. Dispositif de mise en contact au choix pour une carte SIM ou une carte standard selon l'une des revendications précédentes, caractérisé par un boîtier (60) avec des moyens de guidage (72) pour une carte à puce (1) et avec des moyens de réception pour une carte SIM (100), dans lequel sont prévus des moyens adaptateurs (70) qui, lors de l'insertion d'une carte à puce (1), sont manoeuvrés par celle-ci pour permettre la mise en contact de la carte à puce.

13. Dispositif de mise en contact selon la revendication 12, caractérisé par le fait que les moyens adaptateurs sont conçus sous forme d'une plaque disposée, mobile, dans le boîtier.

14. Dispositif de mise en contact selon la revendication 12 ou 13, caractérisé par le fait que, par ses bras de manoeuvre (118), la plaque adaptatrice passe dans le boîtier dans la zone d'insertion de la carte à puce (1) de façon à être repoussée dans le boîtier lors de l'insertion de la carte (1).

15. Dispositif de mise en contact selon l'une des revendications précédentes 12 à 14, caractérisé par le fait que la plaque adaptatrice présente des moyens élastiques (113, 114) et s'appuie, par ceux-ci, contre le boîtier et qu'elle est ainsi contrainte dans une position dans laquelle l'insertion d'une carte à puce (1) n'est possible qu'à l'encontre de la force de ces moyens élastiques.
